# EUROPEAN PATENT APPLICATION

(11) **EP 1 640 761 A1**
(43) Date of publication of application: **29.03.2006**
(21) Application number: 05255635.4
(22) Date of filing: 14.09.2005
(51) Int. Cl.: G02B 26/00, G02F 1/21, G01J 3/26

(54) **Method and device for manipulating color in a display**

(30) Priority: 27.09.2004 US 613491 P; 27.09.2004 US 613535 P; 28.10.2004 US 623072 P; 29.04.2005 US 118110
(71) Applicant: IDC, LLC, San Francisco, CA 94107 (US)
(72) Inventor: Cummings, William J., Millbrae, California 94030 (US); Gally, Brian J., Los Gatos, California 95032 (US)
(74) Representative: Dunlop, Hugh Christopher

(57) **Abstract**

A method and device for manipulating color in a display is disclosed. In one embodiment, a display comprises interferometric display elements formed to have spectral responses that produce white light. In one embodiment, the produced white light is characterized by a standardized white point.

## Description

### Field

The field of the invention relates to microelectromechanical systems (MEMS). Background

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed.

### SUMMARY

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Preferred Embodiments" one will understand how the features of this invention provide advantages over other display devices.

One embodiment is a display apparatus. The apparatus includes a plurality of interferometric modulators. The plurality of interferometric modulators includes at least one interferometric modulator configured to output red light, at least one interferometric modulator configured to output green light, and at least one interferometric modulator configured to output blue light. The red light, green light, and blue light combine to produce said output white light having a standardized white point.

One embodiment is a display apparatus. The apparatus includes at least one display element, the display element comprising a reflective surface configured to be positioned at a distance from a partially reflective surface. The at least one display element is selected so as to produce white light characterized by a standardized white point.

Another embodiment is a display apparatus. The apparatus includes a plurality of display elements, each comprising a reflective surface configured to be positioned at a distance from a partially reflective surface. The plurality of display elements configured to output white light characterized by a standardized white point.

Another embodiment is a method of fabricating a display. The method includes forming at least one display element configured to output light. Forming the display element comprises forming a partially reflective surface and a reflective surface that is configured to be positioned at a distance from the partially reflective surface. The at least one display element is formed so that white light produced by the at least one display element is characterized by a standardized white point.

Another embodiment is a method of fabricating a display. The method includes forming a plurality of display elements configured to output light. Each of the plurality of display elements comprises a reflective surface configured to be positioned at distance from partially reflective surface. The display elements are formed so that white light produced by the plurality display element is characterized by a standardized white point.

Another embodiment is a display apparatus. The apparatus comprises first means for selectively reflecting light having a first color. The apparatus further comprises second means for selectively reflecting light having a second color. The apparatus further comprises third means for selectively reflecting light having a third color. The reflected light of the first, second, and third means combines to produce white light characterized by a standardized white point.

Another embodiment is a display apparatus. The apparatus comprises reflecting light and means for partially reflecting light. The means for reflecting light and the means for partially reflecting light comprise means for modulating light. The light modulating means is configured to interferometrically generate white light characterized by a standardized white point.

Another embodiment is a display apparatus. The apparatus comprises means for reflecting light and means for partially reflecting light. The means for reflecting light and the means for partially reflecting light comprise means for displaying. The displaying means is configured to output white light characterized by a standardized white point.

### BRIEF DESCRIPTION OF THE DRAWINGS

Figure 1 is an isometric view depicting a portion of one embodiment of an interferometric modulator display in which a movable reflective layer of a first interferometric modulator is in a released position and a movable reflective layer of a second interferometric modulator is in an actuated position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of a set of row and column voltages that may be used to drive an interferometric modulator display.
Figure 5A illustrates one exemplary frame of display data in the 3x3 interferometric modulator display of Figure 2.
Figure 5B illustrates one exemplary timing diagram for row and column signals that may be used to write the frame of Figure 5A.
Figure 6A is a cross section of the device of Figure 1.
Figure 6B is a cross section of an alternative embodiment of an interferometric modulator.
Figure 6C is a cross section of another alternative embodiment of an interferometric modulator.
Figure 7 is a side cross-sectional view of an interferometric modulator illustrating optical paths through the modulator.
Figure 8 is a graphical diagram illustrating the spectral response of one embodiment that includes cyan and yellow interferometric modulators to produce white light.
Figure 9 is a side cross-sectional view of the interferometric modulator having a layer of material for selectively transmitting light of a particular color.
Figure 10 is a graphical diagram illustrating the spectral response of one embodiment that includes green interferometric modulators and a "magenta" filter layer to produce white light.
Figures 11A and 11B are system block diagrams illustrating an embodiment of a visual display device comprising a plurality of interferometric modulators.

### DETAILED DESCRIPTION OF PREFERRED EMBODIMENTS

Various embodiments include displays comprising interferometric display elements that are formed to produce white light having selected spectral properties. One embodiment includes a display that produces white light using interferometric modulators that are configured to reflect cyan and yellow light. Another embodiment includes a display that produces white light using interferometric modulators that reflect green light through a color filter that selectively transmits magenta light. Embodiments also include displays that reflect white light that is characterized by a standardized white point. The white point of such a display may be different from the white point of light illuminating the display.

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

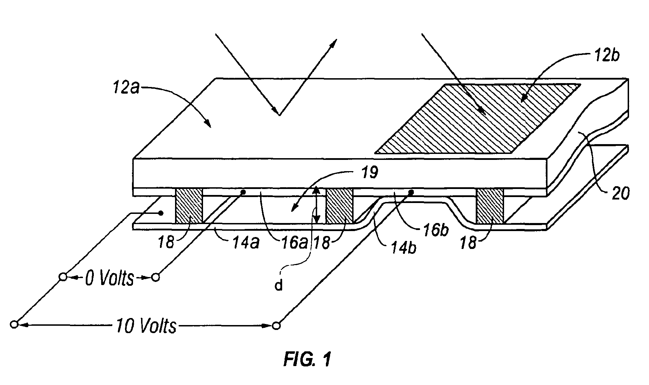

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and 12b. In the interferometric modulator 12a on the left, a movable and highly reflective layer 14a is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The fixed layers 16a, 16b are electrically conductive, partially transparent and partially reflective, and may be fabricated, for example, by depositing one or more layers each of chromium and indium-tin-oxide onto a transparent substrate 20. The layers are patterned into parallel strips, and may form row electrodes in a display device as described further below. The movable layers 14a, 14b may be formed as a series of parallel strips of a deposited metal layer or layers (orthogonal to the row electrodes 16a, 16b) deposited on top of posts 18 and an intervening sacrificial material deposited between the posts 18. When the sacrificial materialis etched away, the deformable metal layers are separated from the fixed metal layers by a defined air gap 19. A highly conductive and reflective material such as aluminum may be used for the deformable layers, and these strips may form column electrodes in a display device.

With no applied voltage, the cavity 19 remains between the layers 14a, 16a and the deformable layer is in a mechanically relaxed state as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

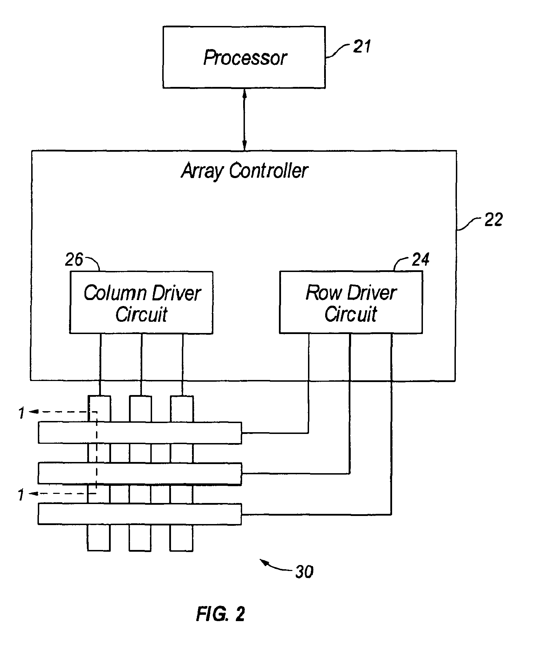

Figures 2 through 5B illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium® , Pentium II® , Pentium III® , Pentium IV® , Pentium® Pro, an 8051, a MIPS® , a Power PC® , an ALPHA® , or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

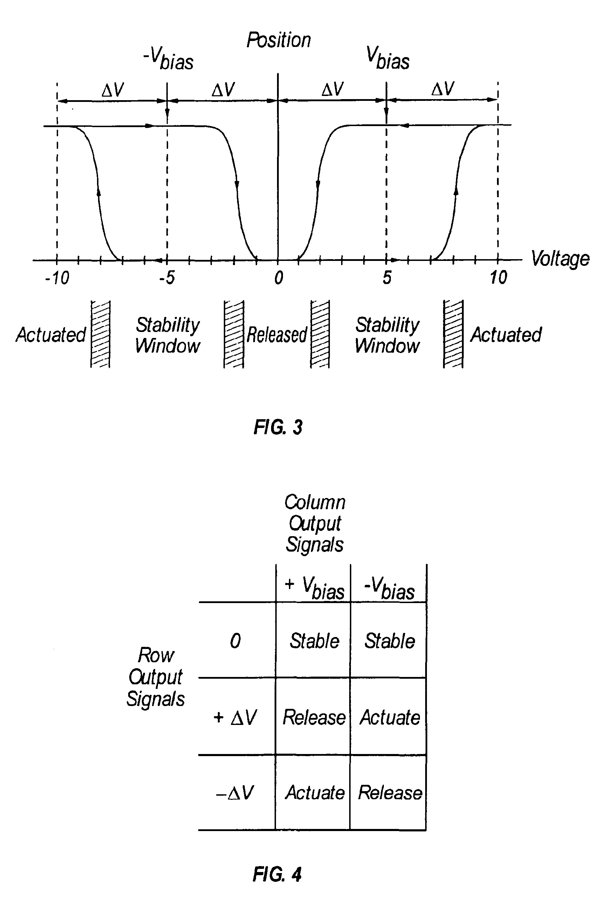

In one embodiment, the processor 21 is also configured to communicate with an array controller 22. In one embodiment, the array controller 22 includes a row driver circuit 24 and a column driver circuit 26 that provide signals to a pixel array 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 3, the movable layer does not release completely until the voltage drops below 2 volts. There is thus a range of voltage, about 3 to 7 V in the example illustrated in Figure 3, where there exists a window of applied voltage within which the device is stable in either the released or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

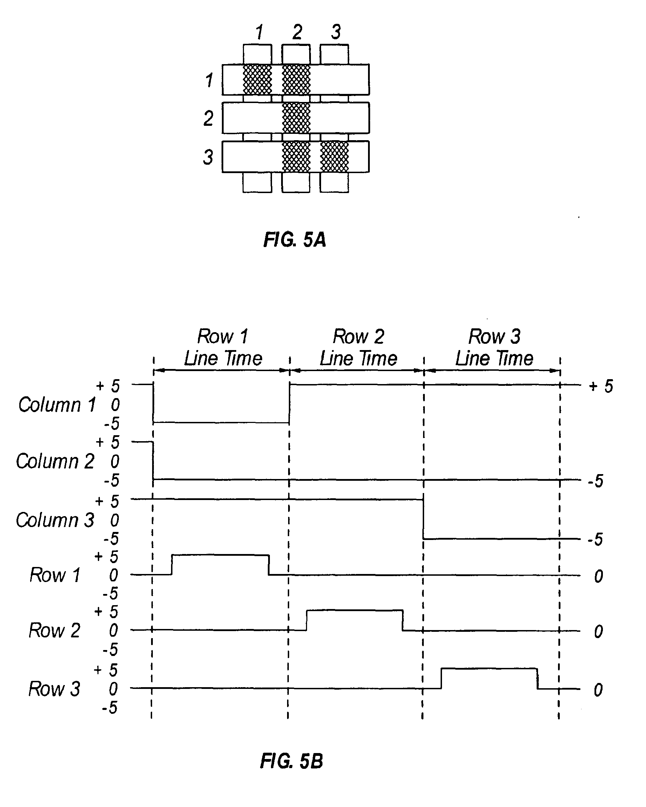

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention. Figures 4, 5A and 5B illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV, which may correspond to -5 volts and +5 volts respectively Releasing the pixel is accomplished by setting the appropriate column to +V_{bias}, and the appropriate row to the same +ΔV, producing a zero volt potential difference across the pixel. In those rows where the row voltage is held at zero volts, the pixels are stable in whatever state they were originally in, regardless of whether the column is at +V_{bias}, or -V_{bias}.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to-5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

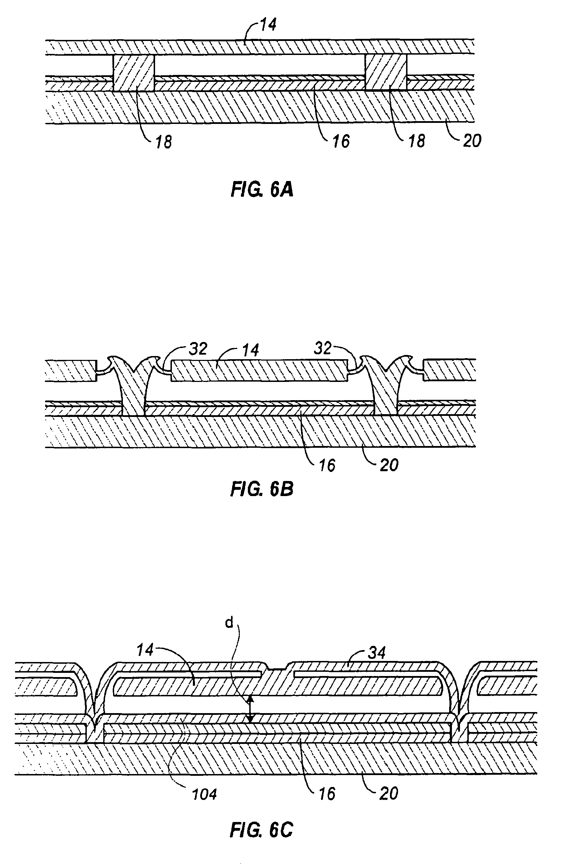

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 14 is deposited on orthogonally extending supports 18. In Figure 6B, the moveable reflective material 14 is attached to supports at the corners only, on tethers 32. In Figure 6C, the moveable reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. In addition, a layer 104 of dielectric material is formed on the fixed layer. The production of various types of interferometric devices is described in a variety of published documents, including, for example, U.S. Published Application 2004/0051929. A wide variety of well known techniques may be used to produce the above described structures involving a series of material deposition, patterning, and etching steps.

As discussed above with reference to Figure 1, the modulator 12 (i.e., both modulators 12a and 12b) includes an optical cavity formed between the mirrors 14 (i.e., mirrors 14a and 14b) and 16 (mirrors 16a and 16b, respectively). The characteristic distance, or effective optical path length, d, of the optical cavity determines the resonant wavelengths, λ, of the optical cavity and thus of the interferometric modulator 12. A peak resonant visible wavelength, λ, of the interferometric modulator 12 generally corresponds to the perceived color of light reflected by the modulator 12. Mathematically, the optical path length d is equal to ½ N λ, where N is an integer. A given resonant wavelength, λ, is thus reflected by interferometric modulators 12 having optical path lengths d of ½ λ (N=1 ), λ (N=2), 3/2 λ (N=3), etc. The integer N may be referred to as the order of interference of the reflected light. As used herein, the order of a modulator 12 also refers to the order N of light reflected by the modulator 12 when the mirror 14 is in at least one position. For example, a first order red interferometric modulator 12 may have an optical path length d of about 325 nm, corresponding to a wavelength λ of about 650 nm. Accordingly, a second order red interferometric modulator 12 may have an optical path length d of about 650 nm. Generally, higher order modulators 12 reflect light over a narrower range of wavelengths, e.g., have a higher "Q" value, and thus produce colored light that is more saturated. The saturation of the modulators 12 that comprise a color pixel affects properties of a display such as the color gamut and white point of the display. For example, in order for a display using a second order modulator 12 to have the same white point or color balance as a display that includes a first order modulator reflecting the same general color of light, the second order modulator 12 may be selected to have a different central peak optical wavelength.

Note that in certain embodiments such as illustrated in Figure 1, the optical path length, d, is substantially equal to the distance between the mirrors 14 and 16. Where the space between the mirrors 14 and 16 comprises only a gas (e.g., air) having an index of refraction of approximately 1, the effective optical path length is substantially equal to the distance between the mirrors 14 and 16. Other embodiments, such as illustrated in Figures 6C, include the layer 104 of dielectric material. Such dielectric materials typically have an index of refraction greater than one. In such embodiments, the optical cavity is formed to have the desired optical path length d by selecting both the distance between the mirrors 14 and 16 and the thickness and index of refraction of the dielectric layer 104, or of any other layers between the mirrors 14 and 16. For example, in the embodiment illustrated in Figures 6c, in which the optical cavity includes the layer 104 of a dielectric in addition to the air gap, the optical path length d is equal to d₁n₁ + d₂n₂, where d₁ is the thickness of layer 1, n₁ is the index of refraction of layer 1 and similarly d₂ is the thickness of layer 2 and n₂ is the index of refraction of layer 2.

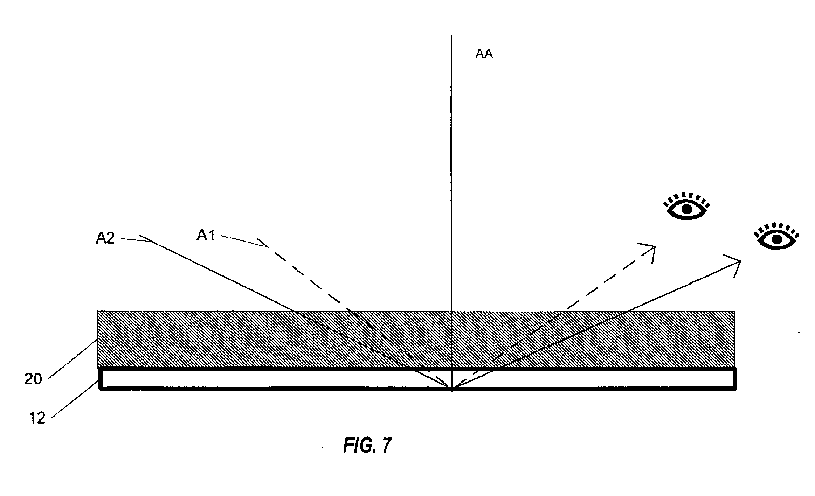

Generally, the color of light reflected by an interferometric modulator 12 shifts when the modulator 12 is viewed from different angles. Figure 7 is a side cross-sectional view of an interferometric modulator 12 illustrating optical paths through the modulator 12. The color of light reflected from the interferometric modulator 12 may vary for different angles of incidence (and reflection) with respect to an axis AA as illustrated in Figure 7. For example, for the interferometric modulator 12 shown in Figure 7, as light travels along the off-axis path A₁, the light is incident on the interferometric modulator at a first angle, reflects from the interferometric modulator, and travels to a viewer. The viewer perceives a first color when the light reaches the viewer as a result of optical interference between a pair of mirrors in the interferometric modulator 12. When the viewer moves or changes his/her location and thus view angle, the light received by the viewer travels along a different off-axis path A₂ corresponding to a second different angle of incidence (and reflection). Optical interference in the interferometric modulator 12 depends on optical path length of light propagated within the modulator, d. Different optical path lengths for the different optical paths A₁ and A₂ therefore yield different outputs from the interferometric modulator 12. With increasing view angle, the effective optical path of the interferometric modulator is decreased according to the relationship 2d cosβ = Nλ, where β is the view angle (the angle between the normal to the display and the incident light). With increasing view angle, the peak resonant wavelength of the reflected light is decreased. The user therefore perceives different colors depending on his or her angle of view. As described above, this phenomenon is referred to as a "color shift." This color shift is typically identified with reference to a color produced by an interferometric modulator 12 when viewed along the axis AA.

Another consideration in the design of displays incorporating interferometric modulators 12 is the generation of white light. "White" light generally refers to light that is perceived by the human eye to include no particular color, i.e., white light is not associated with a hue. While black refers to an absence of color (or light), white refers to light that includes such a broad spectral range that no particular color is perceived. White light may refer to light having a broad spectral range of visible light at approximately uniform intensity. However, because the human eye is sensitive to certain wavelengths of red, green, and blue light, white can be created by mixing intensities of colored light to produce light that has one or more spectral peaks which is perceived by the eye as "white." Moreover, the color gamut of a display is the range of colors that the device is able to reproduce, e.g., by mixing red, green, and blue light.

White point is the hue that is considered to be generally neutral (gray or achromatic) of a display. The white point of a display device may be characterized based on a comparison of white light produced by the device with the spectral content of light emitted by a black bodyat a particular temperature ("black body radiation"). A black body radiator is an idealized object that absorbs all light incident upon the object and which reemits the light with a spectrum dependent on the temperature of the black body. For example, the black body spectrum at 6,500° K may be referred to as white light having a color temperature of 6,500° K. Such color temperatures, or white points of approximately 5,000°- 10,000° K are generally identified with daylight.

The International Commission on Illumination (CIE) promulgates standardized white points of light sources. For example, light source designations of "d" refer to daylight. In particular, standard white points D₅₅, D₆₅, and D₇₅, which correlate with color temperatures of 5,500° K, 6,500° K, and 7,500° K, are standard daylight white points.

A display device may be characterized by the white point of the white light produced by a display. As with light from other light sources, human perception of a display is at least partially determined by the perception of white light from the display. For example, a display or light source having a lower white point, e.g., D55, may be perceived as having a yellow tone by a viewer. A display having a higher temperature white point, e.g., D75 may be perceived as having a "cooler" or bluer tone to a user. Users generally respond more favorably to displays having higher temperature white points. Thus, controlling the white point of a display desirably provides some control over a viewer's response to a display. Embodiments of the interferometric modulator array 30 may be configured to produce white light in which the white point is selected to conform to a standardized white point under one or more anticipated lighting conditions.

White light can be produced by the pixel array 30 by including one or more interferometric modulators 12 for each pixel. For example, in one embodiment, the pixel array 30 includes pixels of groups of red, green, and blue interferometric modulators 12. As discussed above, the colors of the interferometric modulators 12 may be selected by selecting the optical path length d using the relation of d = ½ N λ. In addition, the balance, or relative proportions, of the colors produced by each pixel in the pixel array 30 may be further affected by the relative reflective areas of each of the interferometric modulators 12, e.g., of the red, green, and blue interferometric modulators 12. Further, because the modulators 12 selectively reflect incident light, the white point of reflected light from the pixel array 30 of interferometric modulators 12is generally dependent on the spectral characteristics of incident light. In one embodiment, the white point of reflected light may be configured to be different than the white point of incident light. For example, in one embodiment, the pixel array 30 may be configured to reflect D75 light when used in D65 sunlight.

In one embodiment, the distances d and areas of the interferometric modulators 12 in the pixel array 30 are selected so that white light produced by the pixel array 30 corresponds to a particular standardized white point in an anticipated lighting condition, e.g., in sunlight, under fluorescent light, or from a front light positioned to illuminate the pixel array 30. For example, the white point of the pixel array 30 may be selected to be D₅₅, D₆₅, or D₇₅ in particular lighting conditions. Moreover, the light reflected by the pixel array 30 may have a different white point than the light of an anticipated or configured light source. For example, a particular pixel array 30 may be configured to reflect D75 light when viewed under D65 sunlight. More generally, the white point of a display may be selected with reference to a source of illumination configured with the display, e.g., a front light, or with reference to a particular viewing condition. For example, a display may be configured to have a selected white point, e.g., D55, D65, or D75, when viewed under anticipated or typical sources of illumination such as incandescent, fluorescent, or natural light sources. More particularly, a display for use in a handheld device, for example, may be configured to have a selected white point when viewed under sunlight conditions. Alternatively, a display for use in an office environment may be configured to have a selected white point, e.g., D75, when illuminated by typical office fluorescent lights.

Table 1 illustrates optical path lengths of one embodiment. In particular, Table 1 illustrates the air gap of red, green, and blue interferometric modulators in two exemplary embodiments of the pixel array 30 that produce D₆₅, and D₇₅ white light using modulators 12 of substantially equal reflective areas. Table 1 assumes a dielectric layer comprising two layers, 100 nm of Al₂O₃ and SiO₂ of 400 nm. Table 1 also assumes substantially identical reflective areas for each of the red, green and blue interferometric modulators 12. One of skill in the art will recognize that a range of equivalent air gap distances can be obtained by varying the thickness or index of refraction of the dielectric layer.

**TABLE 1**

| **Modulator Color** | **D65 white** | **D75 white (more blue)** |
|---|---|---|
| Red | 200 (nm) | 195 (nm) |
| Green | 125 (nm) | 110 (nm) |
| Blue | 310 (nm) | 315 (nm) |

It is to be recognized that in other embodiments, different distances d and areas of modulators 12 may be selected to produce other standardized white point settings for different viewing environments. Further, the red, green, and blue modulators 12 may also be controlled so as to be in reflective or non-reflective states for different amounts of time so as to further vary the relative balance of reflected red, green, and blue light, and thus the white point of reflected light. In one embodiment, the ratio of reflective areas of each of the color modulators 12 may be selected so as to control the white point in different viewing environments. In one embodiment, the optical path length d may be selected so as to correspond to a common multiple of morethan one visible resonant wavelength, e.g., first, second, or third order peaks of red, green, and blue, so that the interferometric modulator 12 reflects white light characterized by three visible peaks in its spectral response. In such an embodiment, the optical path length d is selected so that the white light produced corresponds to a standardized white point.

In addition to groups of red, green, and blue interferometric modulators 12 in the pixel array 30, other embodiments include other ways of generating white light. For example, one embodiment of the pixel array 30 includes cyan and yellow interferometric modulators 12, i.e., interferometric modulators 12 that have respective separation distances d so as to produce cyan and yellow light. The combined spectral response of the cyan and yellow interferometric modulators 12 produces light with a broad spectral response that is perceived as "white." The cyan and yellow modulators are positioned proximately so that a viewer perceives such a combined response. For example, in one embodiment, the cyan modulators and yellow modulators are arranged in adjacent rows of the pixel array 30. In another embodiment, the cyan modulators and yellow modulators are arranged in adjacent columns of the pixel array 30.

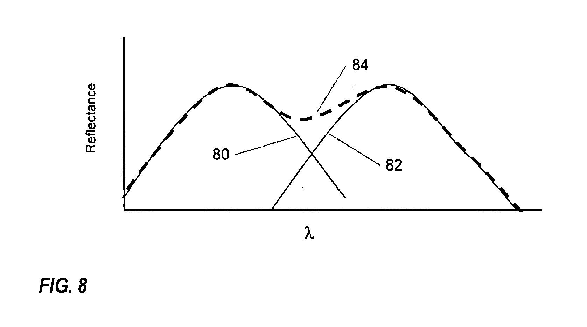

Figure 8 is a graphical diagram illustrating the spectral response of one embodiment that includes cyan and yellow interferometric modulators 12 to produce white light. The horizontal axis represents the wavelength of reflected light. The vertical axis represents the relative reflectance of light incident on the modulators 12. A trace 80 illustrates the response of the cyan modulator, which is a single peak centered in the cyan portion of the spectrum, e.g., between blue and green. A trace 82 illustrates the response of the yellow modulator, which is a single peak centered in the yellow portion of the spectrum, e.g., between red and green. A trace 84 illustrates the combined spectral response of a pair of cyan and yellow modulators 12. The trace 84 has two peaks at cyan and yellow wavelengths but is sufficiently uniform across the visible spectrum so that reflected light from such modulators 12 is perceived as white.

In one embodiment, the pixel array 30 includes a first order yellow interferometric modulator and a second order cyan interferometric modulator. When such a pixel array 30 is viewed from increasingly larger off-axis angles, light reflected by the first order yellow modulator is shifted toward the blue end of the spectrum, e.g., the modulator at a certain angle has an effective d equal to that of a first order cyan. Concurrently, light reflected by the second order cyan modulator shifts to correspond to light from the first order yellow modulator. Thus, the overall combined spectral response is broad and relatively uniform across the visible spectrum even as the relative peaks of the spectrum shift. Such pixel array 30 thus produces white light over a relatively large range of viewing angles.

In one embodiment, a display having a cyan and yellow modulators may be configured to produce white light having a selected standardized white point under one or more viewing conditions. For example, the spectral response of the cyan modulator and of the yellow modulator may be selected so that reflected light has a white point of D55, D65, D75, or any other suitable white point under selected illumination conditions that include D55, D65, or D75 light such as sunlight for a display suited for outdoor use. In one embodiment, the modulators may be configured to reflect light that has a different white point than incident light from an expected or selected viewing condition.

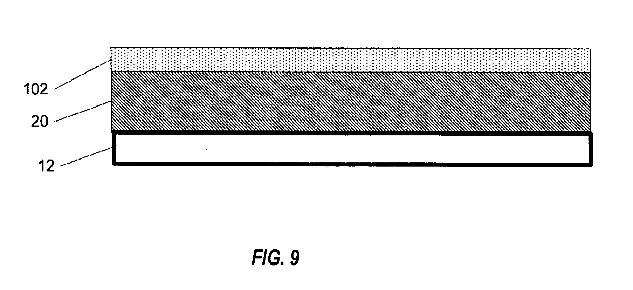

Figure 9 is a side cross-sectional view of the interferometric modulator 12 having a layer 102 of material for selectively transmitting light of a particular color. In an exemplary embodiment, the layer 102 is on the opposite side of the substrate 20 from modulator 12. In one embodiment, the layer 102 of material comprises a magenta filter through which green interferometric modulators 12 are viewed. In one embodiment, the layer 102 of material is a dyed material. In one such embodiment, the material is a dyed photoresist material. In one embodiment, the green interferometric modulators 12 are first order green interferometric modulators. The filter layer 102 is configured to transmit magenta light when illuminated with a broadly uniform white light. In the exemplary embodiment, light is incident on the layer 20 from which filtered light is transmitted to the modulator 12. The modulator 12 reflects the filtered light back through the layer 102. In such an embodiment, the light passes through the layer 102 twice. In such an embodiment, the thickness of the layer 102 of material may be selected to compensate for, and utilize, this double filtering. In another embodiment, a front light structure may be positioned between the layer 102 and the modulator 12. In such an embodiment, the layer 102 of material acts only on light reflected by the modulator 12. In such embodiments, the layer 102 is selected accordingly.

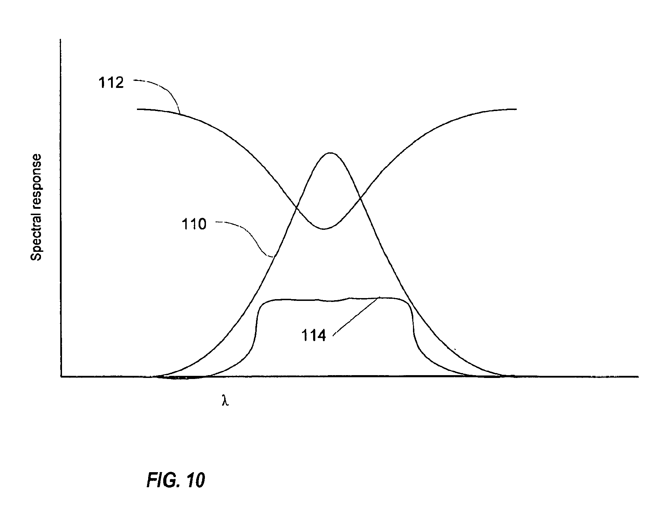

Figure 10 is a graphical diagram illustrating the spectral response of one embodiment that includes the green interferometric modulators 12 and the "magenta" filter layer 102. The horizontal axis represents the wavelength of reflected light. The vertical axis represents the relative spectral response of light incident on the green modulator 12 and filter layer 102 over the visible spectrum. A trace 110 illustrates the response of the green modulator 12, which is a single peak centered in the green portion of the spectrum, e.g., near the center of the visible spectrum. A trace 112 illustrates the response of the magenta filter formed by the layer of material 102. The trace 112 has two relatively flat portions on either side of a central u-shaped minimum. The trace 112 thus represents the response of a magenta filter that selectively transmits substantially all red and blue light while filtering light in the green portion of the spectrum. A trace 114 illustrates the combined spectral response of the pairing of the green modulator 12 and the filter layer 102. The trace 114 illustrates that the spectral response of the combination is at a lower reflectance level than the green modulator 12 due to the filtering of light by the filter layer 102. However, the spectral response is relatively uniform across the visible spectrum so that the filtered, reflected light from the green modulator 12 and the magenta filter layer 102 is perceived as white.

In one embodiment, a display having a green modulator 12 with the magenta filter layer 102 may be configured to produce white light having a selected standardized white point under one or more viewing conditions. For example, the spectral response of the green modulator 12 and of the magenta filter layer 102 may be selected so that reflected light has a white point of D55, D65, D75, or any other suitable white point under selected illumination conditions that include D55, D65, or D75 light such as sunlight for a display suited for outdoor use. In one embodiment, the modulator 12 and filter layer 102 may be configured to reflect light that has a different white point than incident light from an expected or selected viewing condition.

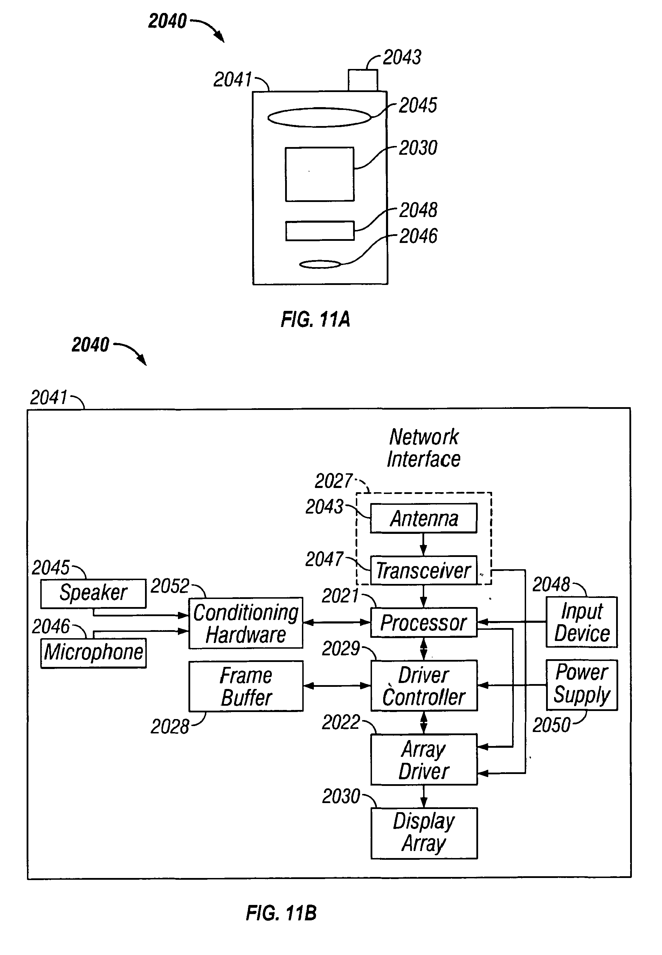

Figures 11A and 11B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 11B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components.

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. As will be recognized, the present invention may be embodied within a form that does not provide all of the features and benefits set forth herein, as some features may be used or practiced separately from others. The scope of the invention is indicated by the appended claims rather than by the foregoing description. All changes which come within the meaning and range of equivalency of the claims are to be embraced within their scope.

## Claims

1. A display apparatus, comprising:
means for reflecting light; and
means for partially reflecting light,
wherein said reflecting means and said partially reflecting means comprise means for interferometrically modulating light and
wherein said light modulating means is configured to interferometrically generate white light **characterized by** a standardized white point.

2. The apparatus of Claim 1, wherein said partially reflecting means comprises a partially reflective surface and said reflecting means comprises a reflective surface.

3. The apparatus of Claim 1 or 2, wherein said light modulating means comprises at least one inteferometric modulator.

4. The apparatus of Claim 3, wherein said at least one interferometric modulator comprises a plurality of interferometric modulators having different spectral output that together produce white light **characterized by** a standardized white point.

5. The apparatus of Claim 4, further comprising an interferometric modulator configured to output red light, an interferometric modulator configured to output green light, and an interferometric modulator configured to output blue light, wherein said red light, said green light, and said blue light combine to produce said white output.

6. The apparatus of Claim 4, further comprising a plurality of interferometric modulators having an area from which light is reflected and wherein said respective areas of said interferometric modulators are selected to produce white light **characterized by** said standardized white point.

7. The apparatus of Claim 3, wherein said at least one interferometric modulator comprises one or more interferometric modulators configured to individually output white light.

8. The apparatus of Claim 3, wherein said at least one interferometric modulator comprises one or more interferometric modulators that individually output white light **characterized by** a standardized white point.

9. The apparatus of Claim 3, wherein the reflecting surface is configured to be positioned at a distance from said partially reflective surface to produce said white light **characterized by** a standardized white point.

10. The apparatus of Claim 3, wherein at least one of said interferometric modulators comprises a filter configured to selectively transmit certain visible wavelengths and substantially filter other visible wavelengths.

11. The apparatus of Claim 1, 2, or 3, wherein said standardized white point is one of D55, D65, or D75.

12. The apparatus of Claim 1, 2, or 3, further comprising means for filtering light, said filtering means configured to selectively transmit certain visible wavelengths and substantially filter other visible wavelengths when illuminated with white light.

13. The apparatus of Claim 12, wherein said filtering means comprises at least one filter.

14. The apparatus of Claim 1, 2, or 3, further comprising means for illuminating said reflecting means and said partially reflecting means, said illuminating means outputting light having a different white point than said light interferometrically generated by said display.

15. The apparatus of Claim 14, wherein said illuminating means comprises a source of illumination.

16. The apparatus of Claim 1, further comprising:
a processor that is in electrical communication with said light modulating means, said processor being configured to process image data; and
a memory device in electrical communication with said processor.

17. The apparatus of Claim 16, further comprising a driver circuit configured to send at least one signal to said light modulating means.

18. The apparatus of Claim 17, further comprising a controller configured to send at least a portion of said image data to said driver circuit.

19. The apparatus of Claim 16, further comprising an image source module configured to send said image data to said processor.

20. The apparatus of Claim 19, wherein said image source module comprises at least one of a receiver, transceiver, and transmitter.

21. The apparatus of Claim 16, further comprising an input device configured to receive input data and to communicate said input data to said processor.

22. A method of fabricating a display, comprising:
forming at least one interferometric modulator configured to output light, wherein forming said modulator comprises forming a partially reflective surface and a reflective surface that is configured to be positioned at a distance from said partially reflective surface,
wherein at least one interferometric modulator is formed so that white light produced by said at least one interferometric modulator is **characterized by** a standardized white point.

23. The method of Claim 22, further comprising forming at least two interferometric modulators wherein said at least two interferometric modulators are formed with respective areas from which light is reflected and with respective distances selected so that said at least two display elements produce white light **characterized by** said standardized white point.

24. The method of Claim 22, further comprising forming at least one interferometric modulator configured to output red light, at least one interferometric modulator configured to output green light, and at least one interferometric modulator configured to output blue light.

25. The method of Claim 22, wherein forming said at least one interferometric modulator comprises forming at least one interferometric modulator configured to individually output white light.

26. The method of Claim 22, further comprising providing at least one filter associated with said at least one interferometric modulator, said at least one filter configured to selectively transmit certain visible wavelengths and substantially filter other visible wavelengths.

27. The method of Claim 22, wherein light reflected by said display has a different white point than light illuminating said display.

28. The method of Claim 22, wherein said white point is one of D55, D65, or D75.

29. A display fabricated by the method of any of Claims 22-28.
